# EUROPEAN PATENT APPLICATION

(11) **EP 1 939 124 A1**
(43) Date of publication of application: **02.07.2008**
(21) Application number: 07254980.1
(22) Date of filing: 20.12.2007
(51) Int. Cl.: B65H 75/40, B65H 75/44, H02G 11/02

(54) **Rotatable spool for winding cords or hoses**

(30) Priority: 28.12.2006 US 877844 P; 26.11.2007 US 944891
(71) Applicant: Techtronic Industries Company Limited, Tsuen Wan New Territories Hong Kong (CN)
(72) Inventor: Burch, Wade F., Anderson, SC 29625 (US); Keith, James A., Jr., Pickens, SC 29671 (US); Younger, Max J., Kansas City, MO 64113 (US)
(74) Representative: Martin, David John

(57) **Abstract**

A rotatable spool (10) includes a frame (40) with a central rod (46) and a hollow cylinder (80) that is rotatable about the central rod (46). The cylinder (80) includes an inscribed helical thread (86) that is formed along the length of the cylinder (80) and a central axis parallel with the central rod. The operator (100) is disposed around a portion of the cylinder (80) and includes a projection (106) engaged with the helical thread (86) such that linear movement of the operator (100) causes the cylinder (80) to rotate about its central axis. A reel (20) is rotatably mounted on the frame (40) and a clutch (120) selectively couples the cylinder (80) and the reel (20) when the operator (100) is depressed toward the frame (40).

## Description

### TECHNICAL BACKGROUND

Hoses and electrical cords are frequently used to transmit fluid or electrical current extended distances between a source and a remote location where these are used. Hoses and electrical cords are often used as temporary conduits of fluid or electrical current, such that these members should to be sufficiently flexible for convenient and fast set-up and removal. Because cords and hoses are flexible, they have a tendency to knot, kink, or become entangled when not coiled after use. Extended lengths of hoses and cords are often stored around a reel that allows for easy and rapid removal for use at a job site by simply pulling a free end of the cord or hose from the reel.

As understood by those of skill in the art, the cord or hose must often be wrapped around a reel by manually rotating the reel about its central axis after a first end of the cord or hose has been fixed to the reel. Wrapping a long cord or hose around a reel can often be a labor intensive process, which often provides a disincentive to taking the time to wrap the cord or hose around a reel, in spite of the organizational benefits derived from doing so.

### BRIEF SUMMARY

In a first aspect the invention resides in a rotatable spool comprising (a) a frame with a central rod, (b) a hollow cylinder rotatable about the central rod, comprising a helical thread formed along the cylinder and a central axis parallel with the central rod, (c) an operator disposed around a portion of the cylinder, comprising a projection that is engaged with the helical thread such that linear movement of the operator causes the cylinder to rotate about its central axis, (d) a reel rotatably mounted on the frame, and (e) clutch selectively coupling the cylinder and the reel when the operator is depressed.

The cylinder preferably comprises a plurality of helical threads and the operator comprises a corresponding plurality of corresponding projections. Engagement between the operator and the cylinder prevents rotation of the operator. A rotatable bracket may be aligned concentrically and partially surrounding the cylinder, the bracket being fixed to an output portion of the clutch with a collar, and having a plurality of radially extended arms that engage the reel. The bracket may have a latch that extends from one of the plurality of arms to engage the reel, the latch comprising a tab portion that is engageable with the reel.

The reel may be configured to accept a flexible elongated member such as a hose or cord, and be removable from the frame by the latch mechanism.

The operator may comprise a disc that is configured to be manipulated by the user to linearly translate the operator with respect to the frame. A first spring may be provided that is configured to be manipulated by the user to linearly translate the operator with respect to the frame. A spring may also be provided disposed between the cylinder and a collar.

The clutch preferably comprises a plurality of first teeth projecting from a bottom surface of the cylinder that are selectively engageable with a plurality of second teeth projecting from the collar, the teeth each comprising a vertical face and an inclined face. The clutch couples the cylinder and the reel when the cylinder rotates in a first direction and the operator is depressed toward the frame, and the clutch disengages the reel and the cylinder when the reel rotates in an opposite direction.

The helical thread may comprise an upstanding position in the proximity of a bottom end of the cylinder. This may define a loop. The projection of the operator may be fixedly engageable within the upstanding portion of the helical thread.

In an alternative construction the clutch may comprise a first magnet disposed upon the cylinder and a second magnet disposed in concert with the spool, wherein the first and second magnets are aligned such that a same polarity of each magnet is proximate the opposing magnet.

The spool may further comprise an electrical cord connected to a portion of the spool and an electrical connection between the electrical cord and an electrical outlet provided in concert with the reel, comprising a plurality of slip rings disposed upon the frame to receive electrical current from the electrical cord, and a plurality of brushes disposed in concert with the reel in electrical connection with the electrical outlet.

In a second aspect the invention provides a rotatable spool comprising (a) a rotatable cylinder comprising a helical groove inscribed on an outer surface of the cylinder, (b) an operator at least partially surrounding the cylinder, the operator comprising a projection that engages the helical groove, (c) a bracket surrounding a portion of the operator and the cylinder, (d) a clutch selectively engaging the cylinder and the bracket, and (d) a reel removeably engageable with the bracket for rotation with the bracket.

In a third aspect the invention provides a rotatable spool comprising (a) a rotatable cylinder comprising a helical thread inscribed on an outer surface of the cylinder, (b) an operator disposed concentrically and at least partially surrounding the cylinder, the cylinder comprising a top end, a bottom end, and a projection radially extending toward the rotational axis provided in the vicinity of the bottom end of the operator, (c) a reel rotatably mounted at least partially surrounding the cylinder and the operator and engageable with the cylinder to rotate therewith.

Advantages of the present disclosure will become more apparent to those skilled in the art from the following description of the preferred embodiments of the invention that have been shown and described by way of illustration. As will be realized, the disclosure is capable of other and different embodiments, and its details are capable of modification in various respects. Accordingly, the drawings and description are to be regarded as illustrative in nature and not as restrictive.

### BRIEF DESCRIPTION OF SEVERAL VIEWS OF THE DRAWINGS

FIG. 1 is a perspective view of a spool for rotating a reel, showing the operator in the extended position.

FIG. 2 is a perspective view of the spool of FIG. 1, showing the operator in the compressed position.

FIG. 3 is a perspective view of the spool of FIG. 1, with the reel removed.

FIG. 4 is a perspective view of the spool of FIG. 1, with the bracket removed.

FIG. 5 is a plan view of the spool of FIG. 1, showing the operator in the extended position.

FIG. 6 is the view of FIG. 5, showing the clutch engaged and the operator in the extended position.

FIG. 7 is the view of FIG. 5, showing the operator in the compressed position.

FIG. 8 is a perspective view of the cylinder of the spool of FIG. 1.

FIG. 9 is an exploded view of the components forming the spool of FIG. 1.

FIG. 10 is a perspective view of an alternate cylinder of the spool of FIG. 1.

FIG. 11 is a detail view of the cylinder and collar of the spool of FIG. 1 with opposing magnets disposed on each of the cylinder and the collar.

FIG. 12 is an exploded view of an alternate spool, with a motor and clutch causing selective rotation of the reel.

FIG. 13 is an upper exploded view of the components of an electrical distribution system of the spool.

FIG. 14 is a bottom exploded view the spool of FIG. 13.

FIG. 15 is an upper exploded view of the components of an electrical distribution system of another spool.

FIG. 16 is a bottom exploded view of the spool of FIG. 15.

### DETAILED DESCRIPTION

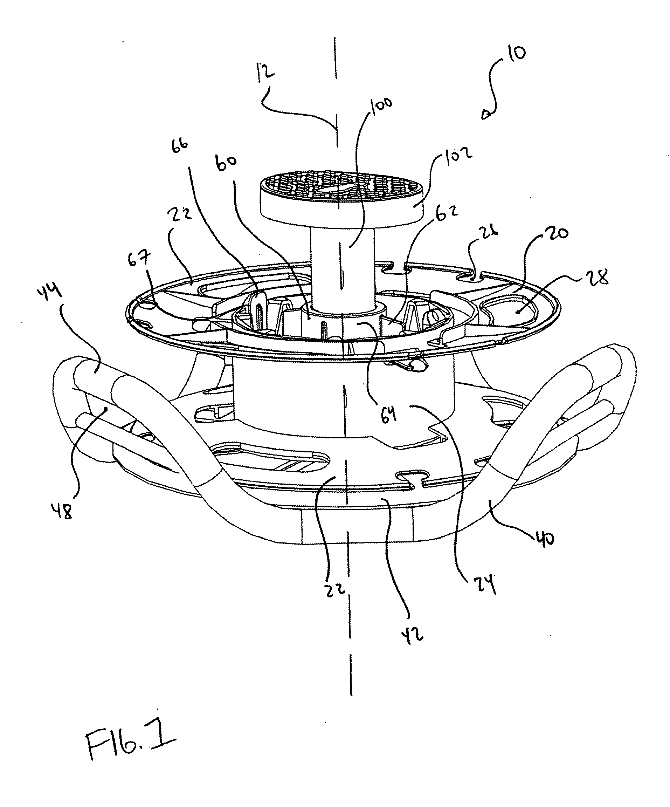

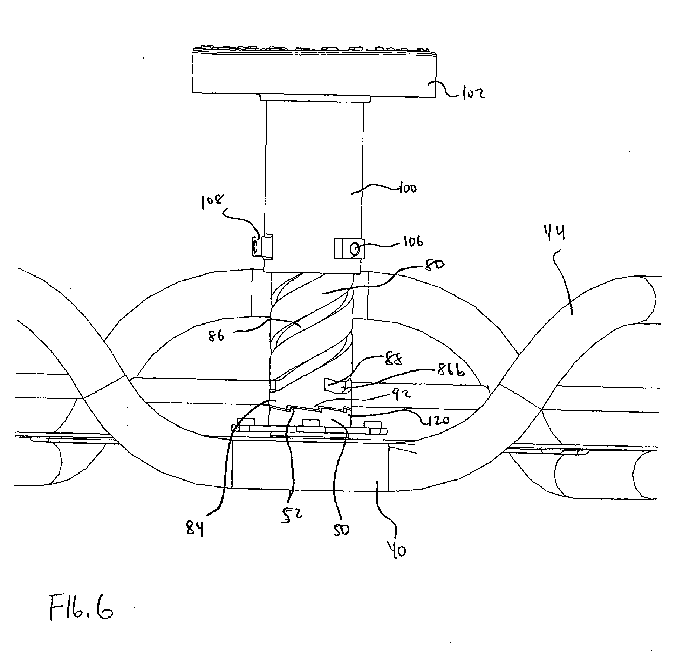

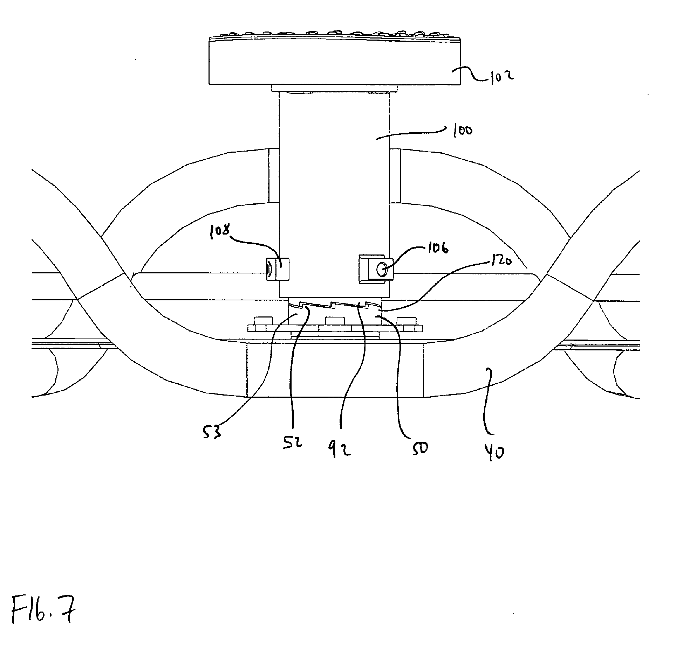

Turning now to FIGs. 1-9, an exemplary embodiment of a rotatable spool 10 for winding a flexible elongated member such as a cord, a hose, a string, a length of tape, a rope, or the like around a reel 20 is provided. While the spool 10 may be used for a plurality of different types of flexible elongated members, the operation will be discussed with respect to a hose for the sake of brevity. The structure of the reel 20 and operation of the spool 10 for other types of flexible elongated members is representative of the discussion with respect to a hose provided herein.

The rotatable spool 10 includes a reel 20 that is rotatably received on a frame 40. A bracket 60 is additionally rotationally mounted about the frame 40 and includes a plurality of ribs 62 that engage the internal surface of the reel 20 to transfer torque from the bracket 60 to the reel 20. A cylinder 80 is rotationally mounted to the frame 40 and includes at least one inscribed helical slot 86 defined on the outer arcuate surface of the cylinder 80. A clutch 120 is provided to selectively transfer torque generated in the cylinder 80 to the bracket 60 to cause the bracket 60 (and accordingly the reel 20) to rotate along with the cylinder 80.

An operator 100, or button, is mounted on the frame 40 and is translatable along the central axis 12 of the spool 10 with respect to the cylinder 80, the bracket 60, and the reel 20 (if installed). The operator 100 includes at least one projection 106 that extends inward from an inner surface of a hollow column 104 of the operator 100 and engages the helical slot 86 in the cylinder 80 to cause the cylinder 80 to rotate about the central axis 12 when the operator 100 is pressed downward toward the frame 40.

As best shown in FIG. 1, the reel 20 includes two discs 22 that define the side surfaces of the reel 20 and that enclose a portion of the volume suitable for winding a hose around a central cylinder 24 of the reel 20. The central cylinder 24 is hollow with an inner diameter slightly larger than the diameter of the bracket 60. The reel 20 may also include a plurality of indentations 26 that extend radially inward from the outer circular edge of the discs 22. The reel 20 further may include a plurality of apertures 28 formed in the discs 22. The apertures 28 may be used as a handle when the reel 20 is removed from the frame 40. The indentations 26 and apertures 28 provide spaces suitable for retaining a first end of a flexible hose within the reel 20, such that the remaining portion of the flexible hose wraps around the central cylinder 24 when the reel 20 is rotated with respect to the frame 40. Further, the indentations 26 and apertures 28 allow the reel 20 to be manufactured with less material than would be required with solid discs, which decreases the weight and the amount of material used to manufacture the reel 20, without sacrificing a significant amount of mechanical strength.

The frame 40 supports the remaining components of the spool 10, including the cylinder 80, the bracket 60, the operator 100, and the reel 20 (when installed around the bracket 60). The frame 40 includes a handle 44, a plate 42, and a central rod 46. The plate 42 is rigidly mounted to the handle 44 and provides a bottom surface for the bracket 60 and the reel 20 to rest upon and rotate with respect to the frame 40. The handle 44 may be formed with a plurality of different geometries and may provide a structure to hold and carry the spool 10. The handle 44 may be formed with at least one enclosed portion 48 in the vicinity of the reel 20 (when installed). During use, the hose may be threaded through the enclosed portion 48, which aids in the removal of kinks or bends from the hose, aiding in the convenience and ease of winding the hose around the reel with the spool 10.

The central rod 46 extends vertically and substantially perpendicularly from the plate 42 and coaxially with the central axis 12 of the spool 10. The central rod 46 provides vertical and rotatable alignment for the cylinder 80, which in turn provides linear translatable alignment for the operator 100 (as aided by a central tube 64 of the bracket 60). The central rod 46 may be fixed to the plate 42 with a fastener 47 that extends through an aperture in the plate 42 or in other similar methods known in the art. Alternatively, the central rod 46 may be integrally or monolithically formed with the plate 42.

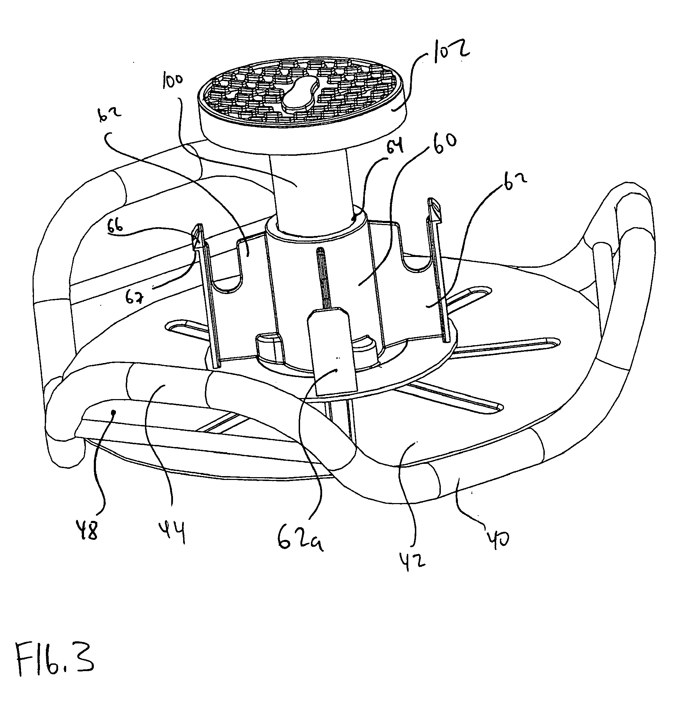

As best shown in FIG. 3, the bracket 60 is rotatably mounted to the frame 40 and the reel 20 may be installed to substantially surround the bracket 60. The bracket 60 includes a plurality of ribs 62 that radially extend outward from a central tube 64. The ribs 62 may each include a face 62a perpendicular to the radially extending portion of the rib 62. The face 62a engages the reel 20 when the reel is installed on the bracket 60. In some embodiments, the face 62a may be arcuate with a radius of curvature that is only slightly smaller than the radius of curvature of the inner central cylinder 24 of the reel 20.

The bracket 60 may include at least one latch 66 that is engageable with the reel 20 when the reel 20 is installed around the bracket 60. The latch 66 may be a tounge-like member that extends upward from the face 62a of a rib 62. The latch 66 includes a tab 67 that extends perpendicularly and radially outward from the centerline of the bracket 60. The distance between the bottom surface of the tab 67 and the plate 42 is slightly larger than the width of the reel 20. The top surface of the tab 67 may be inclined such that the latch 66 tends to bend inward (i.e. toward the center of the bracket 60) when the reel 20 is placed around the bracket 60 to allow the reel 20 to be installed with a single hand.

The outer portion of the tab 67 extends a slightly greater distance from the bracket 60 centerline than the radius of the central cylinder 24 of the reel 20. Accordingly, when the reel 20 is installed on the bracket 60, the tab 67 extends over a portion of the reel 20, preventing the reel 20 from falling off of the bracket 60 if the spool unit is turned over. The latch 66 is sufficiently flexible to allow the latch 66 to be manually flexed inward toward the centerline of the bracket 60 disengaging the tab 67 from the reel 20, allowing the reel 20 to be removed from the bracket 60.

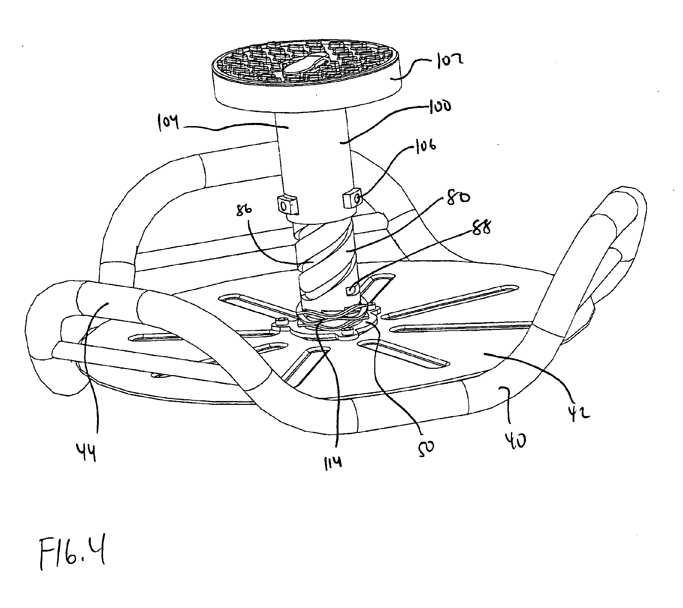

As shown in FIGs. 4-8, the cylinder 80 is a hollow right circular cylinder and includes a top end 82 and a bottom end 84. The cylinder 80 has a slightly larger inner diameter than an outer diameter of a central rod 46 of the frame 40. The central rod 46 aligns the cylinder 80 and allows for rotation about the frame 40 and the central axis 12 of the spool 10. The cylinder 80 includes at least one helical groove 86 that extends around the circumference of the cylinder 80 from the vicinity of the top end 81 of the cylinder 80 to the vicinity of the bottom end 84 of the cylinder 80. The pitch of the helical groove 86 is a function of the size of the cylinder 80 and the materials of the cylinder 80, the operator 100, and the projection 106. The helical groove 86 accepts a projection 106 (discussed in detail below) from the operator 100. In some embodiments, the cylinder 80 may be removable from the spool 10 to allow for different cylinders 80 with different pitches and/or formed from different materials to be used for different applications.

A plurality of helical grooves 86 may be formed in parallel in the cylinder 80. The plurality of helical grooves 86 are provided at consistent arc lengths from neighboring helical grooves 86. In the representative embodiment shown in FIGs. 4-8, three helical grooves 86 are formed on the cylinder 80 at 120 degree intervals from neighboring helical grooves 86. In other embodiments, four helical grooves 86 may be formed on the cylinder 80 at 90 degree intervals from neighboring helical grooves 86. In other embodiments, one or two helical grooves 86 may be formed on the cylinder 89. As can be understood by those of skill in the art, the number of helical grooves 86 is limited by the pitch of the groove 86 and the size of the cylinder 80.

Three or more helical grooves 86 are preferred because they provide for multiple locations for generating torque on the cylinder 80 (as discussed below), which increases the amount of force that can be applied to the operator 100. A greater number of projections 106 provided on the operator 100 (that engage the same number of helical grooves 86) allow each projection to carry a lower percentage of the total transferred force, which generates the torque to rotate the cylinder 80, and allows the operator 100 to handle greater forces for a given protrusion 106 strength and size. Multiple protrusions 106 within the cylinder 80 allow the cylinder 80 and helical thread 86 size to optimized.

The cylinder 80 further includes a plurality of cylinder teeth 92 that extend downward from the bottom end 84 of the cylinder 80. Each tooth 92 may be formed with a vertical face that is parallel to the central axis 12 of the spool 10, and a second face that is at an oblique angle to the central axis 12. Each of the teeth 92 are provided on the cylinder 80 in the same orientation, i.e. a vertical face from a first cylinder tooth 92 is provided next to an oblique face of a neighboring cylinder tooth 92. The teeth 92 may be formed at consistent spacing around the circumference of the cylinder 80. The plurality of cylinder teeth 92 form a first half of the clutch 120. The second half of the clutch 120 is formed by collar teeth 52 that extend upward from the collar 50 (discussed below).

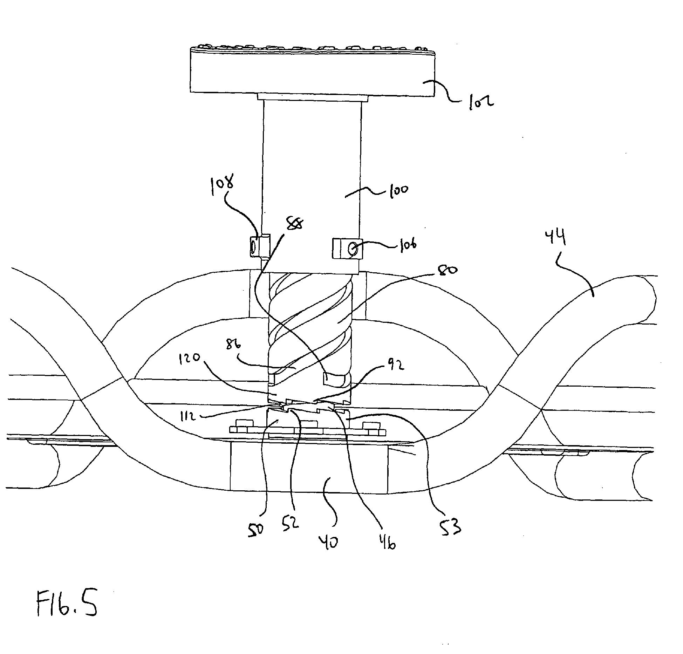

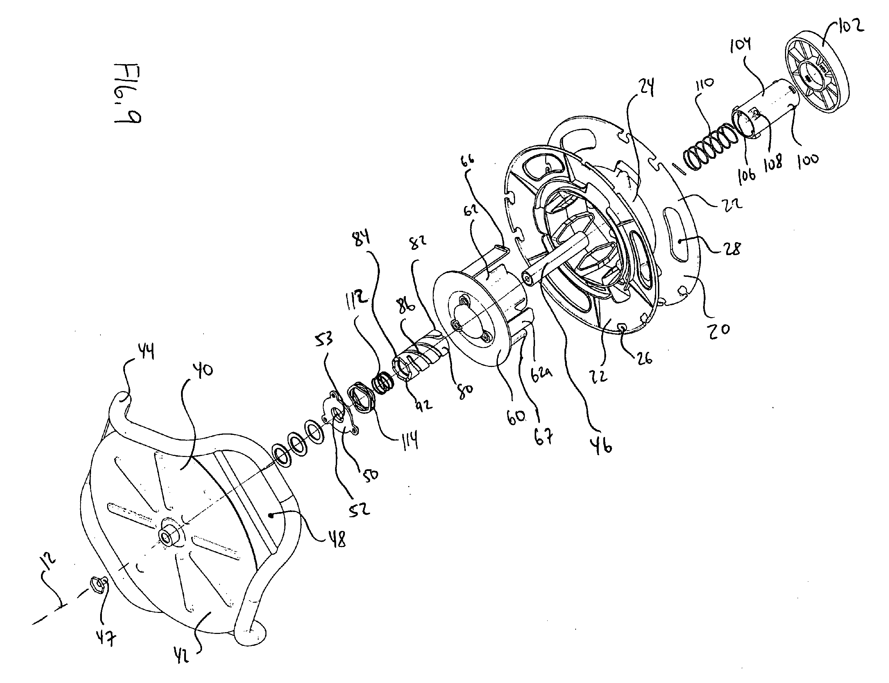

The cylinder 80 is biased upward away from the collar 50 (i.e. so that the cylinder teeth 92 do not engage the collar teeth 52) by a lower spring 112, best shown in FIGs. 5 and 9. The second spring 112 is provided between collar 50 and the bottom end 84 of the cylinder 80 and is disposed around the central rod 46.

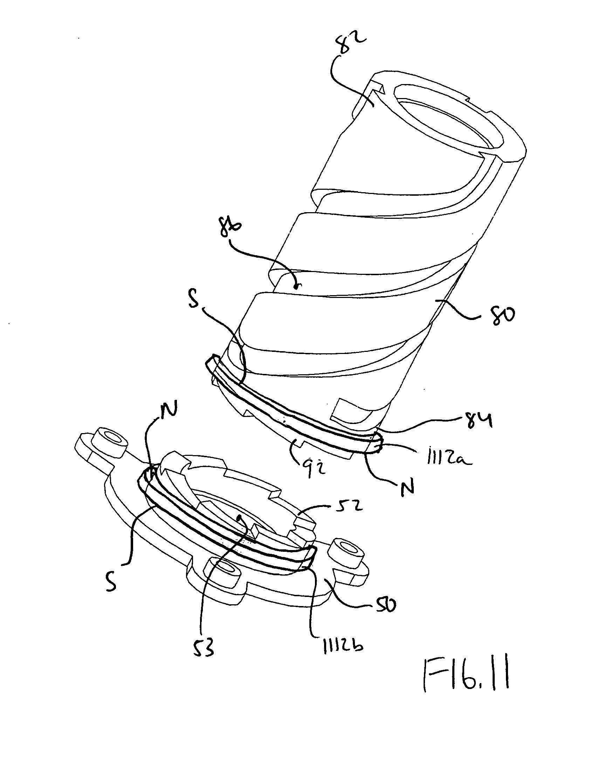

In other embodiments shown in FIG. 11, first and second magnets 1112a, 1112b may be disposed proximate the respective bottom end 84 of the cylinder 80 and the collar 52 instead of or in combination with the second spring 112. Specifically, each of the first and second magnets 1112a, 1112b are disposed such that one of the north pole N or the south pole S of the first magnet 1112a is disposed proximate the same of the north pole N or the south pole S of the second magnet 1112b, such that opposing repulsive magnetic force is generated between the two magnets 1112a, 1112b that serves to maintain the cylinder 80 normally biased away from the collar 50. The repulsive forces between the cylinder 80 and the collar 50 maintain the cylinder teeth 92 and the collar teeth 52 separated from each other such that the collar 50 is normally free to rotate with respect to the cylinder 80.

When the user compresses the operator 100, the cylinder translates toward the collar 50 against the repulsive biasing force generated between the first and second magnets 1112a, 1112b until the cylinder teeth 92 and the collar teeth 52 engage to transfer torque from the cylinder 80 to the collar 50 and ultimately the reel 40. When the compression upon the operator 100 is released, the cylinder translates away from the collar 50 due to the repulsive magnetic force between the first and second magnets 1112a, 1112b and the collar and cylinder teeth 52, 82 disengage.

As shown in FIG. 4, a third spring 114 is provided coaxially with the collar 50 and surrounds the outer surface 53 of the tubular portion of the collar 50 that forms half of the clutch 120. The bottom end of the operator 100 engages the third spring 114 just before the projections 106 reach the bottom end 86b of the helical threads 86. The engagement with the third spring 114 causes a step increase in the resistance to downward compression of the operator 100 and gives the user a tactile warning that the operator is near its downward travel limit.

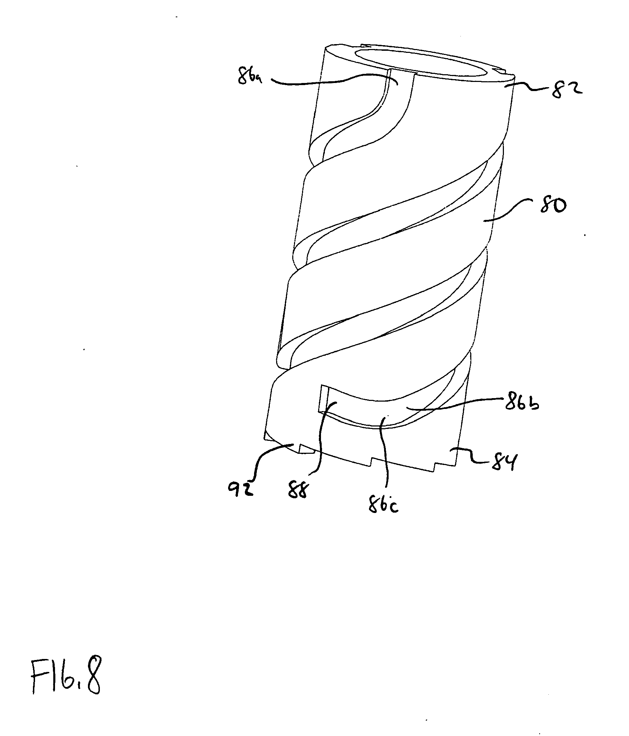

As best shown in FIG. 8, each of the helical threads 86 may additionally include an upstanding portion 88 provided at the bottom end 86b of the helical threads 86 in the vicinity of the bottom end 84 of the cylinder 80. The vertex 86c of the helical threads 86 defines the lowest point of the helical threads 86 on the cylinder 80. When the projections 106 of the operator 100 reach the vertex 86c of the helical thread 86 the cylinder 80 no longer can accept any downward force from the operator 100. The projections 106 can enter the upstanding portion 88 of the helical threads 86 if the user continues to compress the operator 100 toward the frame 40 after receiving tactile notification that the operator 100 has engaged the third spring 114.

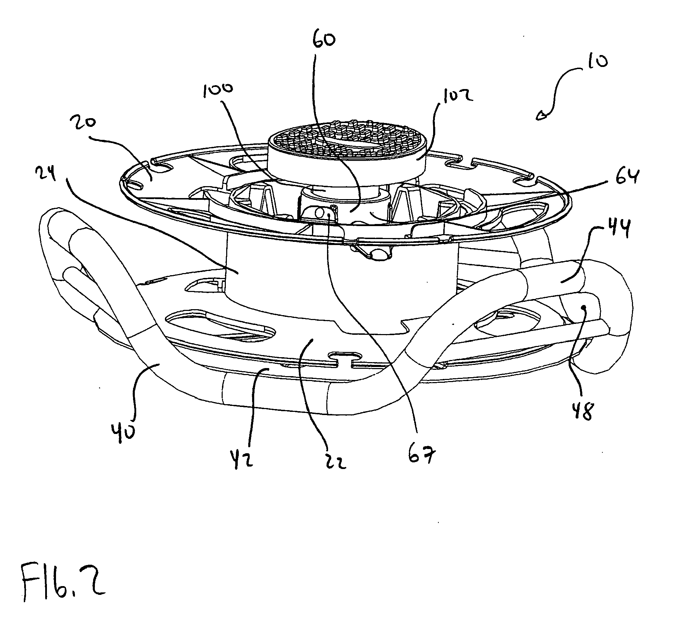

With additional compression of the operator 100 toward the frame 40, the projections reach the bottom end 86b of the helical grooves 86 and the rotational inertia of the cylinder 80 causes the projections 106 to enter the upstanding portion 88 of the helical threads 86. In this position, the operator 100 is prevented from translating away from the frame 40, regardless of the biasing force of the upper spring 110 and the third spring 114. This orientation of the spool 10 (shown in FIG. 2) is beneficial because the spool 10 takes up the least volume with the operator 100 maintained in the vicinity of the frame.

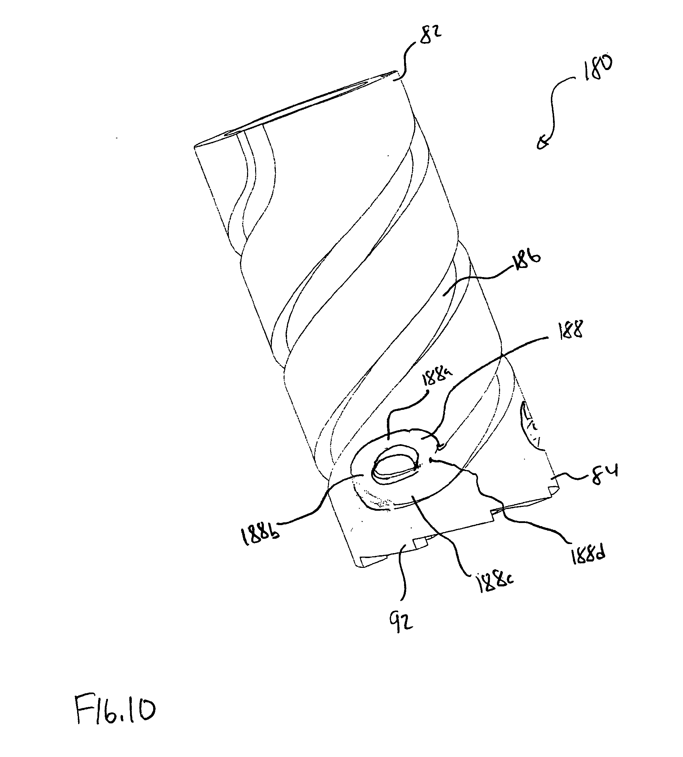

An alternate cylinder 180 is shown in FIG. 10. The cylinder 180 includes the same structural components as the cylinder 80 and the same structural components in both cylinders include the same element numbers. The helical threads 186 vary from the helical threads 86 of the cylinder 80. The helical thread 186 includes a loop 188 that connects with the bottom end of the helical thread 186. The bottom end 188c of the loop 188 defines the lowest point of the helical thread 186 in the cylinder 180. As the operator 100 is pressed by the user, the projections 106 move through the helical threads 186, which rotates the cylinder 180, until the projections 106 reach the point in the helical threads 186 where the operator 100 engages the third spring 114 and the user feels additional resistance to compression. At this point the projections are near the bottom end of the helical thread 186 and the bottom end 188c of the loop 188.

With additional compression of the operator 100, the protrusions reach the bottom end 188c of the loop 188 and the cylinder 180 no longer can accept any downward force from the operator 100. The projections 106 can enter the upstanding portion 188b of the loop 188 if the user continues to compress the operator 100 toward the frame 40 after receiving tactile notification that the operator has engaged the third spring 114.

With additional compression of the operator toward the frame 40, the rotational inertia of the cylinder 180 causes the projections 106 to enter the upstanding portion 188b of the loop 188 and if the operator 100 is released at the appropriate time the projections 106 rest at the top portion 188a of the loop 188. Accordingly, the operator 100 is prevented from translating away from the frame 40, regardless of the biasing force of the upper spring 110 and the third spring 114. When the operator 100 is pressed again toward the frame 40 (while in the locked position of FIG. 2), the projections 106 continue to ride around the loop 188 until reaching the intersection 188d with the main downward portion of the helical thread 186. Upon reaching the downward portion of the helical thread 186, the operator 100 can translate to the extended position of FIG. 1 due to the biasing forces of the first, second, and third springs 110, 112, 114.

The collar 50 is rigidly and coaxially coupled to the bracket 60. In some embodiments, the collar 50 may be monolithically formed with the bracket 60. The collar 50 includes a plurality of collar teeth 52 that extend upward from the collar 50 and form the second half of the clutch 120. The collar teeth 52 are engageable with the cylinder teeth 92 to transfer torque from the cylinder 80 to the collar 50. The collar teeth 52 may be formed with a first vertical face parallel to the rotational axis of the collar 50 and a second face that is at an oblique angle to the rotational axis of the collar 50. Each of the collar teeth 52 are oriented in the same orientation and may be aligned with consistent spacing from neighboring collar teeth 52.

The operator 100 is best shown in FIG. 4-5 and includes a disc 102 assembled or formed at the top of the operator 100 and a hollow column 104 that extends perpendicularly downward from the disc 102. The column 104 additionally includes a plurality of projections 106 that extend radially inward from the inner surface of the column 104 toward the centerline of the column 104. The column 104 includes the same number of projections 106 as the number of the helical threads 86 provided on the cylinder 80. The projections 106 may either extend through holes formed in the column 104 or the projections 106 may be integrally or monolithically formed with the column 104. In some embodiments, a plurality of protuberances 108 extend radially outward from the column 104 at the same locations as the projections 106 are provided.

Each of the projections 106 may be located at consistent arc lengths from neighboring projections 106. For example, in embodiments where 3 projections 106 are provided on the column 104, each projection 106 is positioned 120 degrees along the cylinder 80 from the two other projections. Similarly, in embodiments where four projections 106 are provided, each projection 106 is positioned 90 degrees from its two neighboring projections 106. As discussed above, it is preferable to include as many projections 10 and corresponding helical grooves 86 as possible to provide many parallel points for transferring force from the operator 100 to the cylinder 80.

Additionally, because the operator 100 is placed in compression when pressed toward the frame 40 by the user, the construction of the tubular operator 100 that at least partially surrounds the cylinder 80 is preferable to the opposite structure (i.e. where the operator would be translatable within a hollow cylinder with the helical threads are formed in the inner surface of the cylinder) because the tubular operator 100 has a smaller tendency to buckle than would be the case with a thinner operator. Further, the respective structure of the operator 100 and the cylinder 80 allow for a greater number of force transfer points between the two members that allows the size of the respective members to be minimized while providing sufficient strength to accept any expected input compression force by the user.

The operator 100 is biased upward (i.e. away from the bracket 60 and the reel 20 when installed) by an upper spring 110, best shown in FIG. 9. The upper spring 110 may be disposed within the internal portion of the column 104 between the bottom surface of the disc 102 and the top end 82 of the cylinder 80. The range of travel of the operator 100 with respect to the cylinder 80 is defined by the vertical length of the helical threads 86.

The upper spring 110 may be sized such that the upper spring 110 is slightly compressed when the operator 100 is fully extended from the spool 10, i.e. in the extended position as shown in FIG. 1, and the upper spring 110 becomes further compressed when the operator 100 is pressed downward toward the bracket 60 by the user. The spring constant of the upper spring 110 is selected such that the upper spring 110 is sufficient to cause the operator 100 to translate to the extended position when the operator 100 is released (when the projections 106 are not within the upstanding portion 88 of the helical threads 86, as discussed above), but additionally to allow the operator 100 to be fully compressed to the compressed position (FIG. 2) with a single hand of a typical user. The spring constant may be set in proportion to the pitch of the helical threads 86 of the cylinder 80.

In operation, a flexible hose may be coiled or wound around a reel 20 using the spool 10 in the following manner. Initially, the reel 20 is placed on the spool 10 such that the central cylinder 24 surrounds the operator 100 and the bracket 60. When installing the reel 20 onto the spool 10, the latches 66 automatically bend inward toward the central axis 12 of the spool 10 due to the inclined surface on the tab 67, which allows the reel 20 to be positioned on the spool 10 with a single hand. After the reel 20 is installed, a first end of the hose is fixed to the reel 20. The first end of the hose may be inserted through one of the plurality of indentations 26 or openings 28 on top or bottom discs 21, 22 of the reel 20. Further, the hose may be threaded through an enclosed portion 48 of the handle 44 to aid in the removal of kinks and bends in the hose as it is wound around the reel 20.

When the reel 20 is installed in the spool 10, the clutch 120 (formed from the opposing teeth 92, 52 of the cylinder 80 and the collar 50, respectively) is disengaged and the reel 20 is free to rotate in either rotational direction about the central rod 46 of the frame 40 in concert with the bracket 60. The bracket 60 or the operator 100 is preferably provided with a visible arrow, or another similar marking, to display the direction that the reel 20 will rotate when the operator 100 is depressed, such that the hose becomes wrapped in the correct direction around the reel 20 when the spool is 10 operated. As the reel 20 is manually rotated, the hose wraps around the central cylinder 24 of the reel 20. The user is free to manually rotate the reel 20 until the entire hose, cord, etc. is wrapped around the reel 20.

Alternatively, the operator 100 may be depressed toward the bracket to wrap the hose around the central cylinder 24 of the reel 20. Specifically, the operator 100 can be translated toward the frame 40 with sufficient force to overcome the biasing force of the upper spring 110. As the operator 100 is pressed downward, the projections 106 that are inserted within the helical threads 86 transfer the downward linear force of the operator 100 to the cylinder 80. Initially, the cylinder 80 translates linearly downward against the biasing force of the lower spring 112 until the cylinder teeth 92 engage the collar teeth 52. After the two sets of teeth of the clutch 120 are engaged, the cylinder 80 is prevented from further downward movement in response to continued downward force applied on the operator 100.

With additional force applied to the operator 100, the projections 106 translate within the helical threads 86 on the cylinder 80. Because the cylinder 80 is prevented from further linear movement due to engagement of the clutch 120, the cylinder 80 rotates in accordance with the curvature of the helical threads 86 to provide room for the projections 106 to translate within the helical threads 86. The rotation of the cylinder 80 causes the projections 106 to slide within the helical threads 86 and provides clearance for additional downward translation of the operator 100 toward the bracket 60. Because the opposing teeth of the clutch 120 are engaged (i.e. the vertical portion of the cylinder teeth 92 contacts the vertical portion of the collar teeth 52), torque generated in the cylinder 80 is transferred to the collar 50 causing the bracket 60 to correspondingly rotate. The reel 20 rotates with the bracket 60 due to the connection between the internal surface of the central cylinder 24 and the perpendicular faces 62a of the ribs 62. As the reel 20 rotates, the hose is pulled within the reel 20 and initially wrapped around the central cylinder 24 and then wrapped around interior layers of hose and the central cylinder 24.

After the operator 100 translates a distance almost equal to the vertical length of the helical threads 86, the operator 100 engages the third spring 114 provided around the tubular portion of the collar 50. Upon contacting the third spring 114, the user tactilely feels a step increase in the resistance to compression of the operator 100 and normally releases the operator 100.

Releasing the operator 100 allows the lower spring 112 to expand and disengage the opposing teeth 92, 52 of the clutch 120. At the same time, the upper spring 110 expands, which translates the operator 100 away from the bracket 60. The upward translation of the operator 100 causes the cylinder 80 to rotate in the opposite direction due to the curvature of the helical threads 86. Because the cylinder 80 is no longer mechanically engaged with the bracket 60 (through the clutch 120) the reverse rotation of the cylinder 80 has no effect on the position of the bracket 60 and provides no torque to the reel 20, which allows the reel to coast to a stop. The cylinder 80 continues to rotate with upward movement of the operator 100 until the projections 106 reach the upper end 86a of the helical threads 86.

The user may then repeat the above process by again compressing the operator 100 toward the frame 40, which ultimately causes the reel 20 further rotate in the same direction and additional hose to be coiled around the reel 20. The operator 100 may be fixed in the compressed position (FIG. 2) by continuing to compress the operator 100 after tactilely feeling the step increase in resistance to downward compression, which occurs due to the bottom end of the operator 100 engaging the third spring 114. With additional compression, the protrusions 106 reach the bottom end 86b of the helical threads 86 and then translate into the upstanding portion 88 thereof. When the protrusions 106 engage the upstanding portion 88, the operator 100 is free to translate slightly upward away from the frame 40 a distance equivalent to the height of the upstanding portion 88 of the helical threads 86, but is prevented from further outward translation even with the biasing forces of the upper and third springs 110, 114.

When it is desired to return the operator 100 to the extended position (FIG. 1), the user depresses the operator 100 toward the frame 40 against the biasing forces of the upper and third springs 110, 114, which slightly rotates the cylinder 80. Eventually, the protrusions 106 reach the vertex 86c of the helical threads 86 and the cylinder 80 continues to rotate in the same direction allowing the protrusions 106 to slide along the helical threads 86 toward the top end 86a, and allowing the operator 100 to return to the extended position.

After the hose is fully coiled around the reel 20, the reel 20 may be removed from the frame 40 by bending one or more of the latches 66 inward until the tabs 67 no longer engage the top disc 22 of the reel 20, allowing clearance for the reel 20 to be removed from the frame 40. Alternatively, the hose can be removed from the reel 20 by pulling on the free end of the hose. The outward force on the hose becomes a torque on the reel 20, which rotates with the bracket 60 and the collar 50 to allow the hose to be uncoiled from the reel 20. Because the clutch 120 is disengaged the reel 20 can rotate in either direction required to unwind the hose from the reel 20, allowing the reel 20 with a coiled hose thereon to be placed on the frame 40 and around the bracket 60 in either possible orientation.

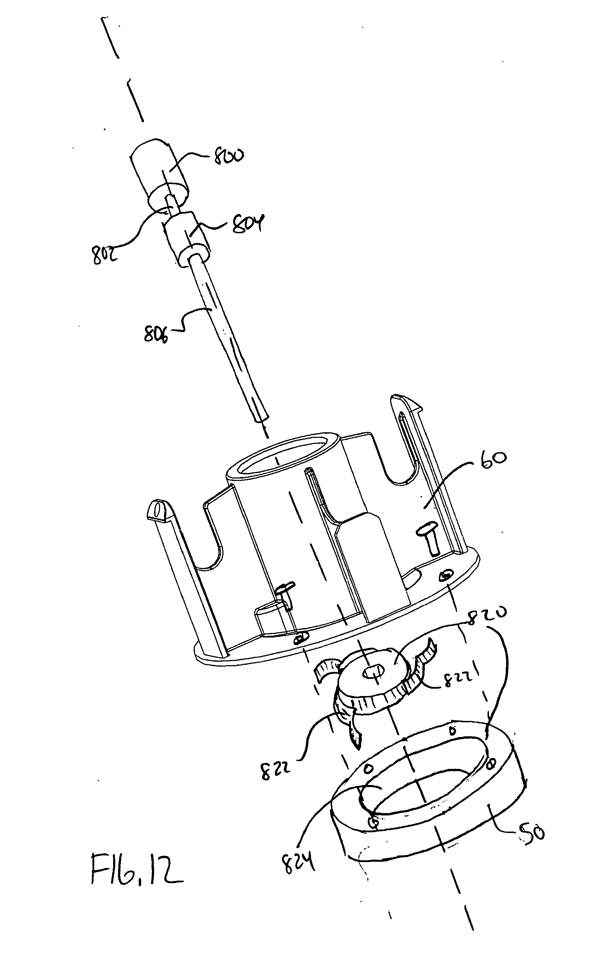

In some embodiments shown in FIG. 12, the operator 100 and cylinder 80 may be replaced with a motor 800 and motor shaft 802 that selectively interacts with the collar 50 to transfer torque thereto and ultimately to the reel 20 (through the bracket 60). In some embodiments, a transmission 804 may be disposed upon the motor shaft 802, which provides an output shaft 806 with a lower rotational velocity than the motor shaft 802, with a higher amount of torque than the motor shaft 802. In some embodiments, a centrifugal clutch 820 may be disposed between the output shaft 806 of the transmission 804 and the collar 50 to selectively transmit torque between the two when the output shaft 806 spins above a certain threshold.

As shown in FIG. 12, the clutch 820 may include one or more shoes 822 that are mounted to the output shaft 806 to allow the shoes 822 to bias outward when the output shaft 806 spins above a certain rotational velocity. As the shoes 822 bias outward they eventually contact a drum 824 disposed upon the collar 50, which makes frictional contact with the one or more shoes 822 to cause the collar 50 to rotate along with the bracket 60 and the reel 20. When the output shaft 806 slows below a certain threshold, the shoes 822 translate inward to remove contact with the drum 824, which allows the collar 50 and the cylinder 80 to rotate with respect to the other of the collar 50 and the cylinder 80.

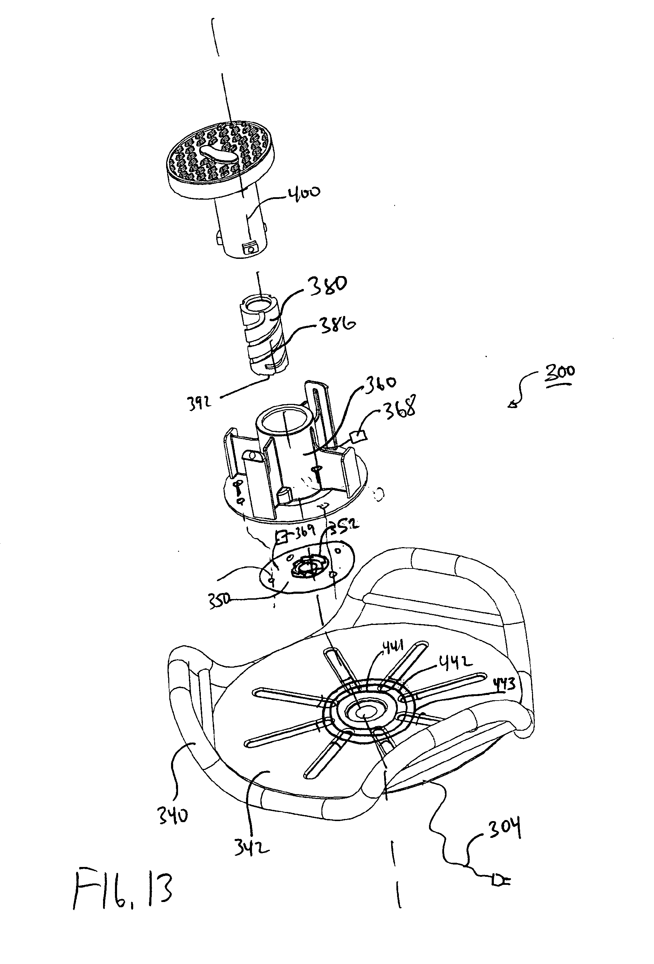

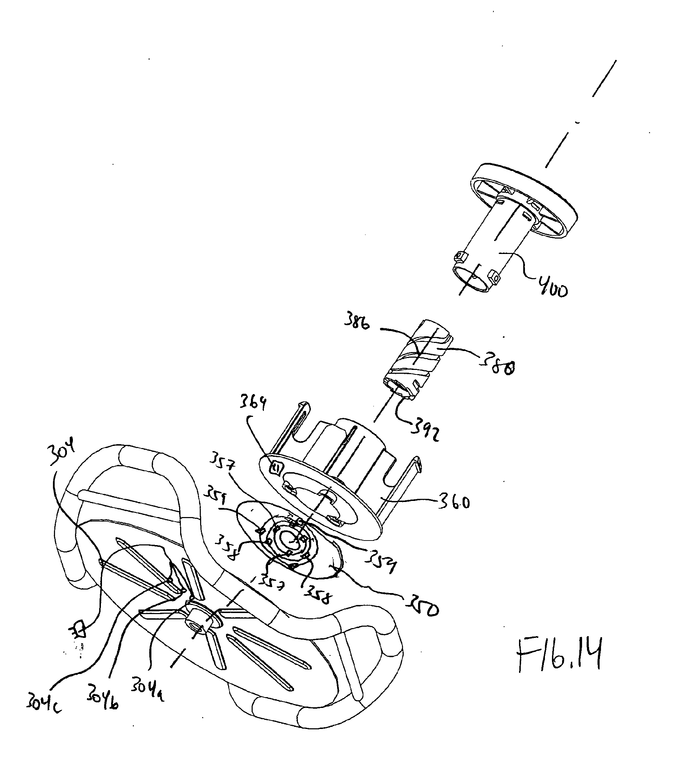

In still other embodiments shown in FIGs. 13-14, an alternate spool 300 may be provided that is configured for use with an electrical power cord. The spool 300 includes all of the components of the spool 10 discussed above, including a reel rotatably received upon a frame 340, a bracket 360 rotatable about the frame 340 with a collar 350 disposed therebetween, and an operator 400 and cylinder 380 configured to cause selective rotation of the reel 320 with respect to the frame 340 when the operator 400 is manipulated by the user, or the reel 320 is rotated by the user pulling on the electrical cord disposed around the reel 320. Each of these structures are constructed and operate similarly to their similar structures discussed above with any changes to the structure identified below.

The spool 300 additionally includes an electrical power transfer system that receives electrical power from a conventional source, such as a wall unit through a power cord 304 attached to the frame 340. The power cord 304 is electrically connected to a plurality of concentric slip rings 441, 442, 443 on the upper surface of the plate 342 of the frame 340. The slip rings 441, 442, 443 are each electrically connected to one of the hot 304a, neutral 304b, and ground lines 304c within the electrical cord, such that the slip rings 441, 442, 443 each allow for electrical communication with the respective line of the cord 304. The slip rings 441, 442, 443 are each disposed upon the plate 342 with an insulator material disposed therebetween to provide a high resistance material between the respective slip ring 441, 442, 443 and the plate 342, both to minimize current flow between the slip rings 441, 442, 443 and the plate 342, and additionally to prevent electrical communication between the slip rings 441, 442, 443. In some embodiments, the plate 342 may be made from plastic or another suitable high resistance material to minimize and substantially eliminate the flow of electrical current from the slip rings 441, 442, 443 and through the plate 342.

The collar 350 is rotatably received upon and above the plate 342 to allow the collar 350 to rotate with respect to the plate 342. Further, the collar 350 is additionally disposed above the slip rings 441, 442, 443. The collar 350 includes a plurality of sets of brushes 357, 358, 359 that are disposed upon the bottom surface of the collar 350 and are aligned such that each set of brushes 357, 358, 359 contacts and rides upon (when the collar 350 rotates with respect to the plate 342) one of the slip rings 441, 442, 443 to transfer electrical current to the sets of brushes 357, 358, 359 from the respective ring 441, 442, 443.

The slip rings 441, 442, 443 are configured upon the plate 342 such that the slip rings 441, 442, 443 are each covered by the bottom surface of the collar 350, to provide sufficient electrical contact between the respective sets of brushes 357, 358, 359 disposed upon the collar 350 and the slip rings 441, 442, 443. The slip rings 441, 442, 443 are each disposed under the collar 350 to allow the collar 350 to mechanically enclose the slip rings 441, 442, 443 to prevent inadvertent contact between a foreign object and the slip rings 441, 442, 443.

The collar 350 is mechanically connected to the bracket 360 that rotatably receives the reel 320 thereon to transfer torque received by the collar 350 (from the cylinder 380) to the bracket 360. The bracket 360 includes a female electrical outlet 368 that is configured to receive a male end of an extension cord wrapped around the reel 320. The electrical connection between the bracket 360 and the male end of the cord additionally retains the cord upon the reel 320, and allows the remainder of the cord to wrap around the central cylinder of reel 320, when the reel 320 is rotated upon the frame 340.

The bracket 360 is electrically connected to the collar 350 when the bracket 360 is mechanically connected to the collar 350. The electrical connection 369 may be through a conventional male/female plug arrangement, or through other types of electrical connectors. In some embodiments, the electrical connectors on each of the collar 350 and the bracket 360 may be configured such that the electrical connection is automatically made when the collar 350 and bracket 360 are electrically connected.

Accordingly, the electrical cord connected and wrapped around the reel 320 may be used to transfer power to a remote location while the electrical cord is partially wrapped around the reel 320 and the spool 300 is connected to a source of electrical power through its power cord 304.

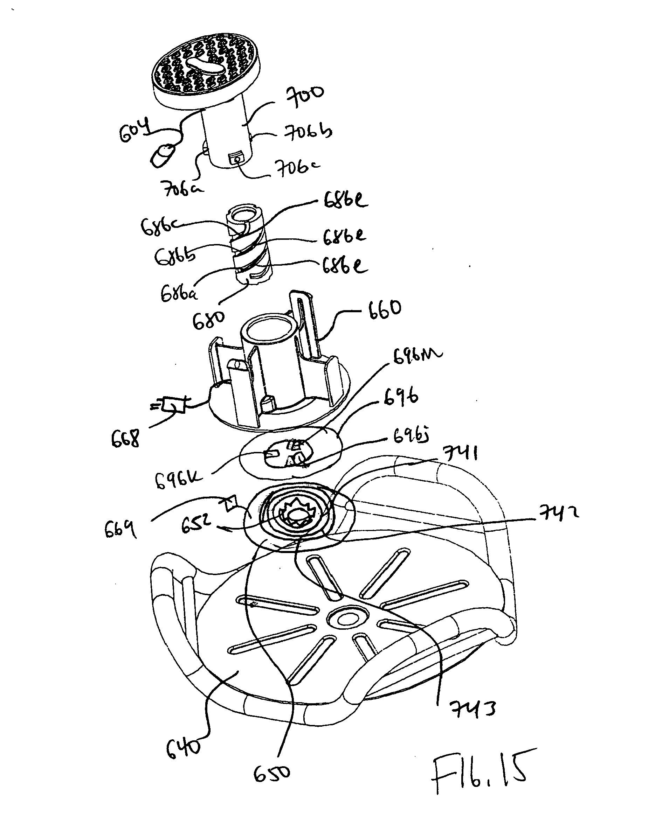

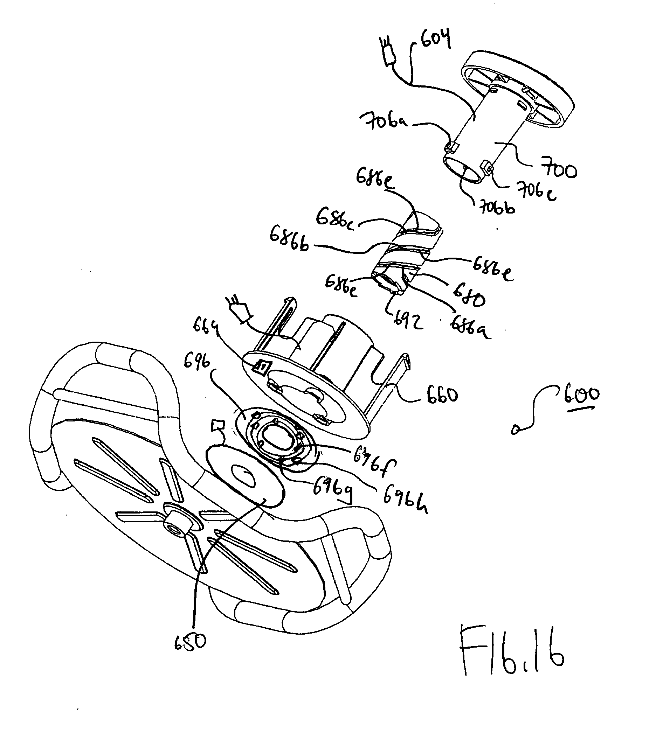

In other embodiments shown in FIGs. 15-16, the electrical cord 604 of the spool 600 may be electrically connected with the operator 700. Similar to the embodiment discussed directly above, the like components (i.e. the spool 600 of this embodiment and spool 10 discussed above) are constructed similarly unless specifically mentioned here. Each of the hot, neutral, and ground lines may be electrically connected to one of three projections 706a, 706b, 706c located within the operator 700 and configured to ride within one of three parallel helical slots 686a, 686b, 686c in the cylinder 680. Each of the three helical slots 686a, 686b, 686c that receives the respective projection 706a, 706b, 706c includes a bus bar or other electrically conductive surface 686e.

These electrically conductive surfaces 686e may be electrically connected to one of three sets of brushes 696f, 696g, 696h disposed upon a plate 696. In some embodiments, each of the three sets of brushes 696f, 696g, 696h may be electrically connected with an inwardly facing tooth 696j, 696k, 606m that extends radially into the respective helical slot 686a, 686b, 686c to electrically connect the brushes to the respective bus bars. The plate 696 may be rigidly mounted proximate the bottom end 684 of the cylinder 680 for contact with dedicated slip rings 741, 742, 743 disposed upon the collar 650. The collar 650 includes an electrical connection 669 with the bracket 660, similar to the electrical connection between the bracket 360 and the collar 350 discussed above. The bracket 660 includes a female outlet 668 that receives the male plug of an extension cord to be wrapped therearound.

In other embodiments, the plurality of brushes 696f, 696g, 696h on the cylinder 680 may be disposed upon a spring (such as the second spring 112 discussed above) either directly or through the plate 696 discussed above, with the spring and plate 696 configured to maintain electrical contact between the brushes 686f and the respective slip rings 741, 742, 743 disposed upon the collar 650, regardless of the position of the opposing teeth 692, 652 on the cylinder 680 and the collar 650 respectively. In other embodiments, the cylinder 680 and the collar 650 may be in constant contact (or consistent spacing from each other) such that the plurality of brushes upon or constrained with the cylinder 680 may be directly mounted to the cylinder 680 and in constant contact with the respective slip rings 741, 742, 743.

It will be apparent that apparatus incorporating modifications and variations will be obvious to one skilled in the art. Inasmuch as the foregoing disclosure is intended to enable one skilled in the pertinent art to practice the instant disclosure, it should not be construed to be limited thereby but should be construed to include aforementioned obvious variations and be limited only by the scope of the following claims.

It is therefore intended that the foregoing detailed description be regarded as illustrative rather than limiting, and that it be understood that it is the following claims, including all equivalents, that are intended to define the scope of this disclosure.

## Claims

1. A rotatable spool comprising:
(a) a frame with a central rod;
(b) a hollow cylinder rotatable about the central rod, comprising a helical thread formed along the cylinder and a central axis parallel with the central rod;
(c) an operator disposed around a portion of the cylinder, comprising a projection that is engaged with the helical thread such that linear movement of the operator causes the cylinder to rotate about its central axis;
(d) a reel rotatably mounted on the frame; and
(e) a clutch selectively coupling the cylinder and the reel when the operator is depressed.

2. The spool of claim 1, wherein the cylinder comprises a plurality of helical threads and the operator comprises a corresponding plurality of corresponding projections.

3. The spool of claim 1 or 2, wherein engagement between the operator and the cylinder prevents rotation of the operator.

4. The spool of any preceding claim , wherein the reel is configured to accept a flexible elongated member.

5. The spool of any preceding claim, where the reel is removable from the frame.

6. The spool of any preceding claim, further comprising a rotatable bracket aligned concentrically and partially surrounding the cylinder.

7. The spool of claim 6, wherein the bracket is fixed to an output portion of the clutch with a collar.

8. The spool of claim 6 or 7, wherein the bracket comprises a plurality of radially extended arms that engage the reel.

9. The spool of claim 8, wherein the bracket comprises a latch that extends from one of the plurality of arms to engage the reel.

10. The spool of claim 9, wherein the latch comprises a tab portion that is engageable with the reel.

11. The spool of any preceding claim, wherein the operator comprises a disc that is configured to be manipulated by the user to linearly translate the operator with respect to the frame.

12. The spool of claim 11, further comprising a first spring provided that is configured to be manipulated by the user to linearly translate the operator with respect to the frame.

13. The spool of claim 7, further comprising a spring disposed between the cylinder and a collar.

14. The spool of claim 7, wherein the clutch comprises a plurality of first teeth projecting from a bottom surface of the cylinder that are selectively engageable with a plurality of second teeth projecting from the collar.

15. The spool of claim 14, wherein the plurality of first and second teeth each comprise a vertical face and an inclined face.

16. The spool of any preceding claim, wherein the clutch couples the cylinder and the reel when the cylinder rotates in a first direction and the operator is depressed toward the frame, and the clutch disengages the reel and the cylinder when the reel rotates in an opposite direction.

17. The spool of any preceding claim, further comprising an upstanding portion of the helical thread in the proximity of a bottom end of the cylinder.

18. The spool of claim 17, wherein the upstanding portion of the helical thread defines a loop.

19. The spool of claim 17, wherein the projection of the operator is fixedly engageable within the upstanding portion of the helical thread.

20. The spool of claim 1, wherein the clutch comprises a first magnet disposed upon the cylinder and a second magnet disposed in concert with the spool, wherein the first and second magnets are aligned such that a same polarity of each magnet is proximate the opposing magnet.

21. The spool of claim 1, further comprising an electrical cord connected to a portion of the spool and an electrical connection between the electrical cord and an electrical outlet provided in concert with the reel.

22. The spool of claim 21, wherein the electrical connection comprises a plurality of slip rings disposed upon the frame to receive electrical current from the electrical cord, and a plurality of brushes disposed in concert with the reel in electrical connection with the electrical outlet.

23. A rotatable spool comprising:
(a) a rotatable cylinder comprising a helical groove inscribed on an outer surface of the cylinder;
(b) an operator at least partially surrounding the cylinder, the operator comprising a projection that engages the helical groove;
(c) a bracket surrounding a portion of the operator and the cylinder;
(d) a clutch selectively engaging the cylinder and the bracket; and
(d) a reel removeably engageable with the bracket for rotation with the bracket.

24. The spool of claim 23, where the reel and the bracket are rotatable in a first direction cylinder when the clutch is engaged, and the reel and the bracket are rotatable in an opposite direction with respect to the cylinder.

25. A rotatable spool comprising:
(a) a rotatable cylinder comprising a helical thread inscribed on an outer surface of the cylinder;
(b) an operator disposed concentrically and at least partially surrounding the cylinder, the cylinder comprising a top end, a bottom end, and a projection radially extending toward the rotational axis provided in the vicinity of the bottom end of the operator;
(c) a reel rotatably mounted at least partially surrounding the cylinder and the operator and engageable with the cylinder to rotate therewith.
